# EUROPEAN PATENT APPLICATION

(11) **EP 2 093 466 A2**
(43) Date of publication of application: **26.08.2009**
(21) Application number: 09152721.8
(22) Date of filing: 12.02.2009
(51) Int. Cl.: F16K 7/14

(54) **Valve**

(30) Priority: 22.02.2008 IT PD20080060
(71) Applicant: Gruppo Bertolaso S.p.A., 37040 Zimella (Verona) (IT)
(72) Inventor: Stefanello, Stefano, I-37047 San Bonifacio (VR) (IT); Stella, Gianluca, 36025 Noventa Vicentina (VI) (IT)
(74) Representative: Gallo, Luca

(57) **Abstract**

Valve for intercepting fluids in liquid or air state used in particular in the industrial plants for bottling liquid food products, comprising a valve body defined in which is a pipe for the passage of a fluid, a membrane (9) provided with a fixed perimeter portion, a moveable central portion (16), and an annular connection portion and a cover (18) removably fixed to the valve body with which it cooperates to hold the perimeter portion of the membrane. Control means mounted in the cover to move the central portion of the membrane between a closure position and an opening position are provided for. The central portion of the membrane defines a shaped concavity susceptible to partially penetrate into the pipe ending annularly in sealing contact with its abutment surface against a tilted flat entrance surface of the pipe.

## Description

The present invention refers to a valve according to the preamble of the main claim.

The valve in question is intended to be used for intercepting fluids in liquid or air state allowing or preventing its passage through the pipes in particular in the industrial plants for bottling food liquids or beverages such as wine, mineral water etc.

The valve according to the finding is advantageously useable mounted on bottle filling machines for intercepting liquids to be bottled or other process fluids such as for example sanitizing liquids, inert gases or air.

More in detail, the valve according to the invention is of the type comprising a valve body defined in which is a pipe which passes through a seat susceptible to receive an interception element, and a cover removably fixed to the valve body and provided with a stem active on the interception element and actuatable by control members to move it from a closure position, wherein it intercepts the fluid flowing in the pipe, and an opening position wherein it allows the passage of the fluid through the pipe.

As known, the interception element is usually arranged to form a separation diaphragm between the valve body, inside which the fluid to be intercepted flows, and the cover, inside which the control members are arranged, in such a manner to prevent the fluid from reaching the same control members or flowing out into the external environment.

For example, known from patents GB 376702 and GB 2026140 are valves wherein the interception element is made up of a flexible element for example made of EPDM, FPM, PTFE, NBR, CSM which is centrally connected to the control stem in such a manner to be moved to open and close inside the seat.

More in detail, the membrane is peripherally held on the valve body to provide a sealing above the seat and it may be deformed in the central part by actuating the stem, to move it in a controlled manner between the abovementioned opening and closure positions. In the latter position the membrane adheres with an area thereof in abutment against a corresponding area of a concave element extended starting from the bottom of the seat.

The sealing of the membrane on the concave element is guaranteed by a wide adhesion between the contact surfaces while the deformability of the membrane adapted to allow them to reach the two opening and closure positions is facilitated by the presence of folds or concavities centred with respect to the abutment area which allow modifying the shape without substantial extensions or yieldings that might inevitably limit their duration

The main drawback of these valves lies in the wear of the abutment area of the membrane on the concave element which, over time, leads to an unwanted reduction of the sealing.

Known are valves wherein the interception element is made up of a plug made up of generally more rigid material, such as for example POLYURETHANE, SILICONE, VITON, with respect to that used for the membranes, which is actuated by the control stem to move within a section of the pipe until it lies against an abutment area suitably shaped against a narrowing of the same pipe usually represented by a conical seat.

The contact surfaces are in this case smaller with respect to the aforementioned membrane valve solution. Furthermore, due to the more rigid material of the plug it is possible to develop greater pressure on a smaller contact area obtaining a greater sealing and with less wear problems related to the abutment area.

The plug is preferably extended from a thinned disk-shaped base forming a single body with the same plug and fixed peripherally to the valve body to attain the sealing above the seat intended to isolate the control members and the external environment from the fluids that pass through the pipe.

The movement of the plug, which in itself forms a rather rigid body, occurs by elastically deforming the thinned base. As the number of the work cycles increases or due to the repeated passages between the opening and closure positions, the connection zone between the base and the plug is easily subjected to cracks which limit the duration of the valve hence requiring replacement of the plug with a new one.

A further drawback of the valves having an interception element with a plug lies in the production cost which - due to the presence of undercuts - usually requires manufacturing such valves by means of a turning process and not easily attainable by moulding, contrary to the case of the membranes.

In this situation, The problem on which the present invention is based is that of overcoming the drawbacks revealed by the technical solutions known up to date, providing a valve capable of obtaining a excellent sealing for a long period of time.

Further obj ect of the present finding is that of providing a valve that is inexpensive in terms of production, easy to manufacture and operatively entirely reliable.

The technical characteristics of the finding, according to the abovementioned objects, are clearly observable from the content of the claims indicated hereinafter and the advantages of the same shall be more apparent in the subsequent detailed description, provided with reference to the attached drawings, which represent a strictly exemplifying and non-limiting embodiment thereof, wherein:
- figure 1 shows a sectional view of the valve subj ect of the present invention;

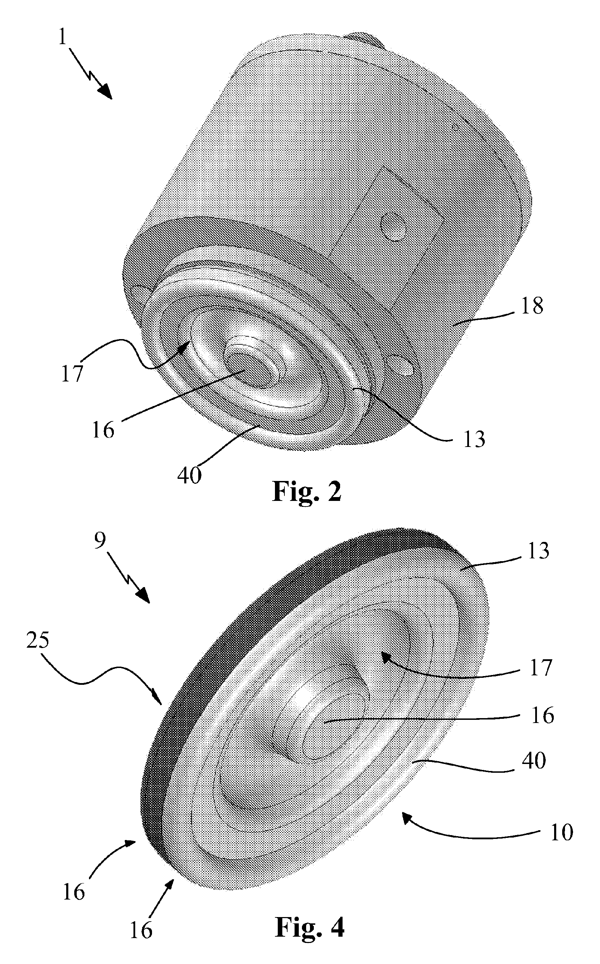

- figure 2 shows a perspective view of the valve subj ect of the present invention with some parts removed to show the others more in clearly in particular to show a cover and a membrane;

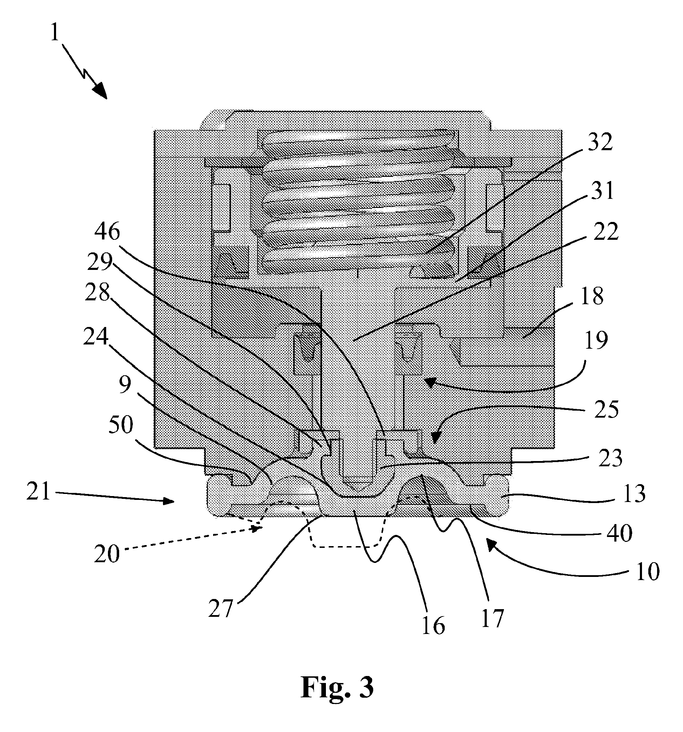

- figure 3 shows a sectional view of the valve portion illustrated in figure 2;
- figure 4 shows a perspective view of a detail of the valve subj ect of the present invention regarding a membrane.

According to the figures in the attached drawings, the valve, subject of the present invention, which is advantageously, but not exclusively, useable in industrial plants for bottling food product liquids such as wine, mineral water etc to intercept fluids in liquid or air state, was indicated in its entirety with 1.

The abovementioned valve 1 is of the two-positions type i.e. opening and closure position not enabling the modulation of the flow but only allowing or preventing the passage of the fluid which may be triggered by pressure or depression between two sections of a pipe with the valve 1 interposed.

According to the embodiment illustrated in the attached figure, the valve 1 according to the invention comprises, in a per se known manner, a valve body 2 defined in which is a pipe 3 for the passage of a fluid, such as for example a food product liquid to be bottled, a sanitizing liquid or a process gas.

Depending on the specific application and in particular depending on the and temperature of the fluid The valve body may be made of plastic material such as for example PVC, PP, ABS, PVDF or metal material, usually stainless steel.

Such pipe 3 is intercepted by a seat 4 which substantially divides it halfway into a first section 5, for example delivery section, and into a second section 6, for example a suctioning system, with the two sections preferably being functionally invertible with respect to each other given that not only one flow direction of the fluid is necessarily provided for in the pipe 3.

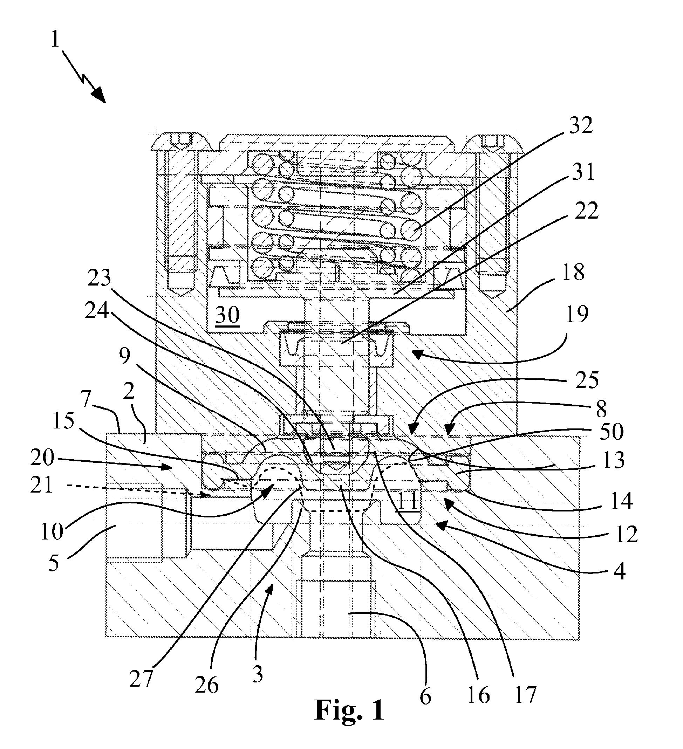

Referring to the preferred example illustrated in the attached figure 1, the seat 4 is hollow starting from a coupling surface 7 del valve body 2 from which it is accessible through an opening 8. The seat 4 is approximately cylindrical-shaped with the first section 5 of the pipe 3 connected laterally and the second section 6 of the pipe 3 connected to the bottom thereof. A membrane 9 represented by a diaphragm preferably made of polymer material such as for example EPDM is fixed to close the opening 8 of the seat 4.

The membrane 9 is provided with a first face 10 facing inwards the seat 4 to delimit an internal chamber 11 and it is accommodated with a perimeter portion 12 having an enlarged edge 13, into an annular seat 14 obtained above a shoulder 15 of the seat 4.

More in detail, the membrane 9 comprises a central portion 16, moving orthogonally to its disposition plane, and a connection position 17 which connects the perimeter portion 12 to the central portion 16 without interruption.

The connection portion 17 has a configuration susceptible to be deformed to allow the central portion 16 of the membrane 9 to move with a travel orthogonal to its disposition plane between two working closure and opening positions better described hereinafter.

More clearly, the connection portion 17 is shaped in such a manner to be deformed allowing the central portion 16 of the membrane 9 to move without its fibres being substantially stretched in extension. For such purpose, the connection portion 17 may be provided with one or more folds or it may have a shape outlined in detail hereinafter.

The valve 1 is further provided with a cover 18 removably fixed to the valve body 2, for example by means of screws, with which it cooperates to hold the perimeter portion 12 of the membrane 9 rigidly fixed .

Mounted inside the cover 18 are control means 19 susceptible to operate according to the desired working steps, to move the central portion 16 of the membrane 9 between a closure position 20 (indicated with a dashed line) and an opening position 21.

The control means 19 in particular comprise a moveable stem 22 which is engaged with the head 23 thereof into an engagement seat 24 obtained centrally on the second face 25 of the membrane 9.

Referring to the closure working position 20 acquired by the membrane 9, the central portion 16 ends in abutment with the respective area of the first face 10 on a contact surface 26 of the valve body 2 intercepting the fluid flowing in the pipe 3.

Referring to the opening working position 21 acquired by the membrane 9, the central portion 16 is separated from the contact surface 26 allowing the passage of the fluid in the pipe 3.

According to the idea on which the present invention is based, the central portion 16 of the membrane defines - on the first surface 10 - a shaped concavity susceptible to sealingly lie, in the closure position 20, annularly against the contact surface 26 defined inside the pipe 3. The abovementioned shaped concavity appears as a protrusion projecting from the first face 10 of the membrane 9.

More in detail, the concavity of the central portion 16 of the membrane 9 partially penetrates into the second section 6 of the pipe 3, which - for the purpose - has a mouth with a flat tilted entrance surface which narrows towards the chamber 11 of the seat 4.

The concavity of the central portion 16 has a quite narrow contact surface 27 on the flat surface of the contact surface 26 defined by a perimeter edge, in particular circular, having a small radius of curvature.

The aforementioned connection portion 17 of the membrane 9 defines - according to the preferred embodiment of the present invention - a convexity, which develops annularly and internally delimits - on the second face 25 of the membrane 9 - the seat 24 for engaging the head 23 of the moveable stem 22.

The shaped concavity of the central portion 16 positively corresponds on the first face 10 to the engagement seat 24 on the second face 25 of the membrane 9.

More in detail, the abovementioned head 23 is screwed against the head of the moveable stem 22 and it is glued against the engagement seat 24 obtained on the second face 25 of the membrane 9.

The membrane 9 is further provided with a projecting lip 28 which is extended from the second face 25 of the membrane 9 partially closing the engagement seat 24.

Such projecting lip 28 is inserted in a holding manner into an annular depression 29 obtained on the head of the stem 22 and it is further externally held by a washer, in particular made of stainless steel, coaxially mounted on the stem 22.

The second face 25 of the membrane 9, when the latter is in opening position 21, lies against a shaped face 50 of the cover 18, which determines its stop from the passage from the closure position, preventing stretches that could cause the membrane to deteriorate its mechanical characteristics over time.

The shaped face 50 of the cover 18 is centred around the hole of the stem 22, and it is configured to receive in adherence the second face 25 of the membrane 9. In particular, the abovementioned shaped face 50 has a step portion to define - at the upper part- the annular seat 14 adapted to receive the edge 13 of the membrane 9, and a portion counter-shaped with respect to the connection portion 17 of the membrane 9 in particular defining an annular concavity adapted to receive the annular convexity of the membrane 9.

The control means 19 are provided with a pneumatic actuation obtained by means of a nozzle connected to a source of air - under pressure - by means of an electrovalve adapted to load or unload a chamber 30 provided in the cover 18 and delimited by a cylinder 31 arranged in a sealing manner on the internal surface of the same chamber 30 and bearing a stem 22 fixed to an end thereof.

With the chamber 30 under pressure, the cylinder 31 overcomes the elastic counterforce of elastically yielding means for example simply made up of a spring 32 (or even by several springs dimensioned depending on the load) preferably mounted coaxially on the same cylinder arranging the latter at an end of the chamber with the stem 22 holding the membrane 9, fixed at the head 23 thereof, in the opening position 20.

Upon removal of pressure from the chamber 30, the spring 32 moves the stem 22 to the other end of the chamber 30 determining the movement of the membrane 9 in closure position 21.

According to a variant embodiment of the present invention, the first face 10 of the membrane 9, susceptible to get into sealing contact with its central part 16 against the contact surface 26 inside the pipe 3, is covered by a teflon coated layer indicated with 40 in the attached figures.

The abovementioned teflon layer 40 makes the surface for contact with the food products, i.e. the face 10 of the membrane 9, neutral from a chemical point of view due to the fact that teflon is substantially inert with respect to food products, and more resistant from a mechanical point of view with respect to the remaining part of the membrane 9 made in rubber, EPDM or similar material.

The mechanical resistance of the teflon layer 40, less deformable than the rubber of the membrane 9 (preferably made of EPDM), allows the latter to be pushed by the stem 22 with greater force under pressure against the contact surface 26 of the valve body 2, and thus allows ensuring a greater sealing against the membrane, limiting contact wear.

The particular configuration of the membrane 9, i.e. its capacity to deform to acquire the two working positions 20, 21, allows the teflon layer 40 to remain adherent to the membrane 9 without exfoliating over time.

Therefore, the finding thus conceived attains the preset objects.

Obviously the finding may acquire, in its practical assembly, even shapes and configurations different from the one described above without departing from the present scope of protection.

Furthermore, all details may be replaced by technically equivalent elements and the dimensions, shapes and materials used may vary depending on the requirement.

## Claims

1. Valve comprising:
- a valve body defined in which is a pipe for the passage of a fluid, and a seat intercepted by such pipe;
- a membrane provided with a first face facing inwards said seat and comprising a fixed perimeter portion, a central portion moveable orthogonally with respect to the disposition plane of said membrane, and an annular connection portion arranged to connect said perimeter portion with said central portion and having at least one curvature intended to be deformed substantially without elastic extension following the movement of said central portion;
- a cover removably fixed to said valve body with which it cooperates holding the perimeter portion of said membrane fixed rigidly ;
- control means mounted in said cover, said means operating centrally on the second face of said membrane to move its central portion between a closure position wherein said central portion is in abutment against the first face on an abutment of said valve body intercepting the fluid that flows in said pipe and an opening position wherein said central portion has the first face separated from said contact surface allowing the passage of said fluid;
**characterised in that** the central portion of said membrane defines on the first face at least one shaped concavity susceptible to sealingly lie - in said working position - annularly against said contact surface defined inside said pipe.

2. Valve according to claim 1, **characterised in that** the connection portion of said membrane defines on the first face at least one annular convexity.

3. Valve according to claim 2, **characterised in that** said control means comprise a moveable stem, and **in that** said annular convexity internally delimits - on the second face of said membrane - a seat for engaging the head of said moveable stem, which substantially emerges from said first face, with said shaped concavity.

4. Valve according to claim 3, **characterised in that** said engagement seat is provided with an internally projecting lip susceptible to be engaged into an annular groove obtained on said stem in proximity to its head.

5. Valve according to any one of the preceding claims **characterised in that** the first face of the membrane is covered with a teflon layer.

6. Valve according to claim 1, **characterised in that** the concavity of said membrane partially penetrates into said pipe getting into sealing contact with an abutment thereof against a tilted flat entrance surface of said pipe.

7. Valve according to claim 6, **characterised in that** said abutment is defined by a perimeter edge, in particular circular, having a small radius of curvature.

8. Valve according to claim 5, **characterised in that** said teflon layer has a greater mechanical resistance with respect to the remaining part of said membrane ed in particular, it is more rigid with respect to the remaining part of said membrane.

9. Valve according to claim 1, **characterised in that** said second face of the membrane, in opening position lies against a shaped face of said cover.
